# EUROPEAN PATENT SPECIFICATION

(11) **EP 2 775 191 B1**
(45) Date of publication and mention of the grant of the patent: **31.08.2016**
(21) Application number: 14158229.6
(22) Date of filing: 07.03.2014
(51) Int. Cl.: F16L 55/105, F16K 51/00, F16K 17/00, F16L 55/124

(54) **System for removing from a pipe fitting a plug for intercepting a fluid**
Einrichtung zum Entfernen aus einem Rohrfitting einen Stopfen zur Fluidunterbrechung
Système pour enlever d'un raccord de conduit un obturateur d'arrêt du fluid

(30) Priority: 08.03.2013 IT MI20130356
(43) Date of publication of application: 10.09.2014
(73) Proprietor: Greiner S.p.A., 25065 Lumezzane (BS) (IT)
(72) Inventor: Lena, Roberto, 25065 Lumezzane (BS) (IT); Astori, Giorgio, 25065 Lumezzane (BS) (IT)
(74) Representative: Marietti, Andrea

(56) References cited:
- AU-A1- 2004 200 360
- DE-A1- 3 308 876
- US-A- 4 299 255
- US-A- 4 883 085

## Description

The present invention relates to a system for removing a plug installed in a pipe fitting allowing to intercept the fluid in a piping designed to transport fluids, such as water or gas. The present invention also relates to a tool and a plug of the removing system cooperating with each other.

Plugs that are installed in pipe fittings in turn constrained to, or made integral with, a piping, in which passes a fluid to be intercepted, are known in the art. Such plugs are generally provided with a deformable body adapted to be inserted inside the piping for intercepting the fluid as a result of its deformation. It should be immediately noted that the term pipe fitting is referred herein to any element made integral to a pipe fitting, or constrainable to a piping, for example by welding, or by constraining two detachable parts, which allows to obtain an offtake of said piping, in fluid communication with the latter, for example in order to allow to install inside it a plug provided with a deformable body suitable to intercept the fluid flow passing in the piping at the position wherein the pipe fitting is installed.

In many circumstances it becomes necessary to intercept the fluid flowing in a piping, for example when it is necessary to perform inspections or works on the part of the piping downstream of a given point, or if new branches have to be installed, or in the case wherein the supply of the fluid has to be shut off for a period, for example to defaulting users.

For example, the gas for domestic use is delivered to the various users in a building by means of one or more risers, that is to say rising pipes, extending mainly vertically and separating from the part under the riser or the underground buried connection.

In their turn, from the riser the individual user branches separate, i. e. the pipings wherein the gas flows from the riser up to the user measurement unit (measurement instruments) or, in the absence of the latter, to the end intercepting member of the connection.

If it is necessary to work on the riser, or else on the user branches separating therefrom, for example to perform a maintenance type work, such as the replacement of measurement units, part of the pipings, etc. or to provide new user branches, and the like, it becomes necessary that the flow inside the riser is shut off, resulting in a suspension of the gas supply to all the utilities branching therefrom, even if not concerned by the works that are being carried out.

In such cases, in order to prevent any inconvenience to the users, a riser offtake can be provided to by-pass the segment of the riser, or the user branches at, or downstream of, the piping segment on which the works are being carried out, or else it is possible to temporarily shut off the fluid flow by inserting a plug inside the piping.

To carry on such operations, fittings are known shaped so as to be welded or otherwise constrained on the pipings at the portion thereof where the offtake has to be obtained, or where the flow should be temporarily shut off.

This type of pipe fittings is used for safety drilling by means of known pipe-drilling tools, inside which a manually-operated rotating shaft is provided having a cutting head, generally a hollow cutter, constrained to its end. The pipe drilling tool is connected to the pipe fitting by interposing a valve, usually a mirror or flat valve, allowing the drilling operations to be carried out without causing a gas leakage.

As soon as the drilling operations are accomplished, it is possible to use the offtake to connect a branch pipe, or else the operator can seal off the pipe fitting by means of an intermediate plug and an outer cap, both of which can be removably installed on the pipe fitting, such that the branch pipe can be installed at a later time.

Alternatively, a deformable plug can be installed in the piping through the pipe fitting and, in particular, inside the piping through the hole made on the piping, thereby actually causing the flow shut-off downstream of the position in which the pipe fitting is installed on the piping.

The plug can be installed by means of the pipe drilling tool itself, which allows to replace the cutter with a plug-holder head, or else by means of appropriate devices provided with properly shaped heads that allow to transmit to the plug the rotation and/or translation motion required for inserting it into the pipe fitting and, accordingly, into the piping.

In particular, the plug-holder heads are shaped such as to cause the plug to rotate to tighten it by screwing at an inner threaded portion of the pipe fitting.

The plug is generally made of an elastically deformable material and is passed through the pipe fitting to reach the piping and cause the shut off of the fluid flow as a result of its deformation caused by the contact with an inner surface of the piping and by the compression force applied by the tool to which the aforesaid plug-holder head is constrained.

Document AU2004200360 discloses a plug having a deformable body and a threaded portion allowing the installation of the plug in the pipe fitting.

According to further known embodiments, such pipe fittings are provided with flange means, separable from each other, for anchoring to the piping, allowing actually to avoid welding operations of the pipe fitting to the piping.

The Applicant developed a plug that is suitable to be quickly and easily installed on a pipe fitting being, at the same time, compact and with a low visual impact.

In fact, the plug is provided with a threaded portion suitable to cooperate with a corresponding threaded portion of the pipe fitting to allow to easily install and remove the plug in/from the pipe fitting.

In more details, in such an embodiment, the plug is coupled to a supporting body able to push it inward the pipe fitting, and therefore towards the piping, during its screwing. In other words, the installation of the plug inside the piping, through the pipe fitting, causes the displacement of the plug (which is therefore flattened and consequently swells up) inside the branch pipe of the pipe fitting, and thus inside the piping.

Such a type of plug is described in the Patent Application MI2012A000182, in the name of the Applicant.

This type of plugs can be easily installed in the pipe fitting and left in the fluid intercepting position even for long periods, since it is not necessary that the tool used for the installation and the intermediate sealing valve are maintained on the fitting.

As mentioned, the plug comprises a deformable body and a threaded portion, generally formed on the supporting body of the plug, suitable to cooperate with a corresponding threaded portion of the pipe fitting in which it is installed. Even in this case, as already mentioned, it is possible to install the plug in the pipe fitting by means of the same pipe drilling tool after replacing the cutting head with a plug-holder head, or else by means of a separate tool provided with a plug-holder head set in rotation by a rotating operating shaft which is able to apply to the plug the rotation motion needed for installing and, in particular, screwing it in the pipe fitting.

As mentioned, these tools are generally provided with means for transmitting to the plug the rotation motion needed for its screwing at the pipe fitting through corresponding threads, respectively made on the pipe fitting and the plug, cooperating with each other.

Such means comprise, for example, one or more protruding means provided on the plug-holder head suitable to engage one or more corresponding seats of which the plug is provided with, and therefore able to transmit to the latter the rotation by manually operating from outside the rotating shaft of the pipe drilling tool, or the specialized tool having the plug-holder head constrained thereto.

Generally, the protruding means and, in general, means for transmitting the rotation motion to the plug extend substantially parallel with the axial displacement of the plug needed to install/remove it on/from the pipe fitting.

Accordingly, if the deformable body of the plug, not fully-returned to its undeformed position, interferes with the piping or the pipe fitting itself, this may cause the plug-holder head to be separated from the plug itself that might remain anchored inside the pipe fitting such that the removing operations become much more complicated.

In fact, in some circumstances, the axial displacement of the plug toward the outside of the pipe fitting may be obstructed or at least made difficult, such that the removing operations of the plug from the pipe fitting become much more complicated when the fluidic passage in the piping has to be restored, for example at the end of the works on the piping or plants downstream of the plug, or if it is necessary to restore the gas or water supply to the defaulting user.

In particular, it is possible to run into these problems when the plug has to be removed from the pipe fitting by unscrewing the plug from the pipe fitting itself and, in particular, when the plug is subsequently axially displaced toward the outside of the pipe fitting. In fact, the deformable body of the plug, as a result of its flattening in the piping, may not return to its initial undeformed condition; as a result, a difficult axial sliding of the latter may be caused such that its extraction from the piping and the pipe fitting itself becomes difficult.

In fact, using conventional plug-holder heads provided with protruding portions arranged axially and parallel to the displacing direction of the plug, during the axial displacement motion to extract the plug, the protruding portions of the plug-holder head could slide out of the corresponding seats provided in the plug because of the resistance against the axial displacement applied, for example, by the deformable body not fully-returned to its undeformed shape.

It is an object of the present invention to solve the above briefly discussed problems related to the removal of the plug from a pipe fitting when the passage of the fluid flow inside the piping has to be restored.

It is therefore a further object of the present invention to provide a removing system and, in particular, a tool cooperating with a plug, which allows to simply, effectively and safety remove the plug from the pipe fitting without risking to leave it inside the pipe fitting, in particular during the axial displacement for removing it from the pipe fitting due to the deformable body of the plug possibly interfering with the piping and/or with the inner portion of the pipe fitting itself.

These and other objects are achieved by means of a plug according to the present invention as defined by claim 1, cooperating with a tool in a system according to claim 6. Features of the plug are described in claims 1 to 5.

Therefore, the present invention relates to a system for removing a plug from a pipe fitting comprising a plug provided with at least one deformable body and at least one respective supporting body provided with a first threaded portion that is suitable to cooperate with at least one threaded portion of the pipe fitting in which it is installed, and at least one second threaded portion having its screwing direction opposite to the screwing direction of the first threaded portion. The system of the present invention also comprises a tool provided with a main body to which an operating shaft is coupled, the latter being axially translatable and rotatable with respect to the main body, the operating shaft being also provided with means for its setting in rotation and/or translation. The operating shaft comprises at least one threaded portion that has the same screwing direction of the second threaded portion of the plug and that is suitable to cooperate with the second threaded position of the plug.

Advantageously, while removing the plug from the fitting, the fact that the screwing direction of the second threaded portion of the plug is equal to the screwing direction of the threaded portion of the removing tool, but opposite to the screwing direction of the first threaded portion of the plug, allows to firmly constrain the plug to the tool, allowing at the same time to unscrew the plug from the pipe fitting.

In fact, the plug according to the present invention comprises at least one deformable body and at least one first threaded portion intended to cooperate with a threaded portion of the pipe fitting to allow the latter to be installed on it, particularly by screwing. The plug comprises, as mentioned, at least one second threaded portion having its screwing direction opposite to the screwing direction of the first threaded portion of the plug.

The cooperation between the second threaded portion of the plug and the threaded portion of the tool allows the plug to be effectively removed from the pipe fitting preventing the two elements from separating during removing operations and, in particular, during the axial displacement (in the X direction) toward the outside of the pipe fitting, imparted by the operating shaft of the removing tool to the plug.

As mentioned, this effect is achieved by making the screwing direction of the second threaded portion of the plug equal to the screwing direction of the threaded portion of the removing tool, but opposite with respect to the first threaded portion of the plug allowing it to be constrained to the plug.

According to a characteristic aspect of the present invention, the threaded portion of the tool having the same screwing direction with respect to the screwing direction of the second threaded portion, is rotationally integral with the operating shaft of the tool and can be made directly on the outer surface of the operating shaft. According to a further possible embodiment, the tool comprises a removable head that can be constrained to the operating shaft such as to be rotationally and translatably integral with it. According to this embodiment the threaded portion having the same screwing direction with respect to the screwing direction of the second threaded portion of the plug, is made on the removable head.

According to a preferred embodiment of the present invention, the second threaded portion of the plug is made on the inner surface of at least one hollow of the plug such as to form a nut thread. On the other hand, the threaded portion of the tool is preferably made on the outer surface of the operating shaft or the head constrained thereto, thus forming a screw.

Preferably, the threaded portion of the removing tool and the second threaded portion of the plug have a left-handed screwing direction, whereas the first threaded portion of the plug allowing to constrain it to the pipe fitting has a right-handed screwing direction.

In this way, when the operating shaft is set in rotation to unscrew (remove) the plug from the pipe fitting, the threaded portion of the tool will screw in the second threaded portion of the plug (these two threaded portions having the same screwing direction) firmly constraining the removing tool, and particularly its operating shaft, with the plug. Keeping to set in rotation the operating shaft, the unscrewing of the first threaded portion from the threaded portion of the plug is carried on causing the unscrewing of the plug from the pipe fitting.

As a result, while unscrewing the plug from the pipe fitting, the threaded portion of the removing tool screws in the second threaded portion of the plug making the two elements integral with each other.

In this way, it is possible to safely, simply and effectively translate the plug toward the outside, by extracting it from the pipe fitting, without risking the separation of the tool and especially of its operating shaft (and possibly the head constrained thereto) from the plug.

Moreover, the present invention relates to a method for removing a plug from a pipe fitting by means of a system of the above described type, and in particular through a tool and a plug of the above described type.

The method comprises the step of installing the plug on a pipe fitting by screwing the first threaded portion of the plug to the respective threaded portion of the pipe fitting.

Obviously, the plug to be removed by the removing method according to the invention, can have been previously installed on the pipe fitting. Subsequently, when the plug has to be removed from the pipe fitting, the body of the removing tool has to be directly or indirectly constrained to the pipe fitting, for example if there is a valve interposed between the pipe fitting and the tool.

Subsequently, the method comprises the step of setting in rotation the operating shaft in order to screw the threaded portion of the removing tool within the second threaded portion of the plug having the same screwing direction. By currying on rotating the operating shaft in the same rotating direction, it is moreover determined the unscrewing of the first threaded portion of the plug from the threaded portion of the pipe fitting, de facto allowing the removal of the plug from the pipe fitting.

Advantageously, as already said, the screwing of the threaded portion of the removing tool within the second threaded portion of the plug allows to make the two elements integral with each other, completely preventing the risk of causing their separation due to the axial displacement of the operating shaft for removing the plug from the pipe fitting, in particular caused by frictional forces countering the extraction (removal) of the plug from the pipe fitting which are produced , for example, by the deformable body of the plug not returned to its undeformed condition.

Additional features and advantages of the present invention will be more evident from the following description, made by way of non-limiting example, with reference to the attached figures, wherein:
- figure 1 shows two views, rotated 90° from each other, of a possible embodiment of the tool for removing a plug according to the present invention;
- figure 1A shows two sectional views of the tool along C-C and E-E planes of figure 1;
- figure 2 shows two views, rotated 90° from each other, of the tool for removing a plug according to the present invention installed on a pipe fitting by interposing a valve;
- figure 2A shows two sectional views of the plug according to the present invention along B-B and A-A planes of figure 2 wherein the tool is visible in a position engaged with the plug in order to extract it from the pipe fitting;
- figure 3 is a possible embodiment of a plug according to the present invention;
- figure 4 shows two views rotated 90° from each other of the tool for removing the plug according to the present invention provided with means for transmitting the rotation motion from the operating shaft to the plug, needed to install it in the pipe fitting;
- figure 4A shows two sectional views of the tool along N-N and M-M planes of figure 4, wherein means for transmitting the rotation motion from the operating shaft to the plug are shown.

The attached figures show a possible embodiment of the system according to the present invention comprising a tool 1 and a plug 10. The system according to the present invention allows to remove a plug 10 from a pipe fitting 50 wherein it is installed, in order to intercept the fluid flowing inside a piping 70 on which the pipe fitting 50 is assembled.

As previously said, it should be noted that the term "pipe fitting" is referred herein to any element made integral with a piping, or constrainable to a piping, for example by welding, or else by constraining two detachable parts, which allows to obtain an offtake of that piping, in fluid communication therewith, in order to allow to install inside it and inside the respective piping to which it is applied, a plug provided with a deformable body suitable to intercept the fluid flowing inside the piping at the place where the pipe fitting is installed.

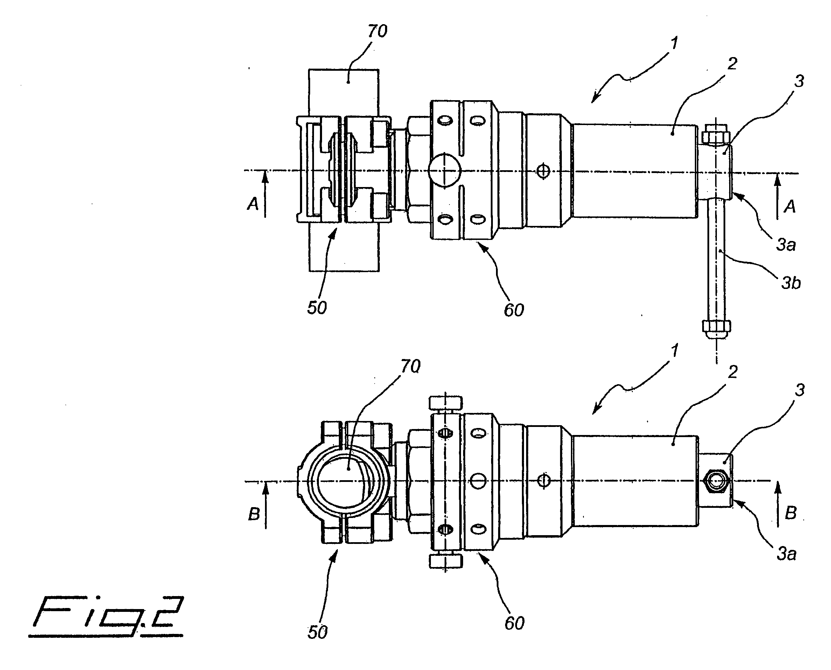

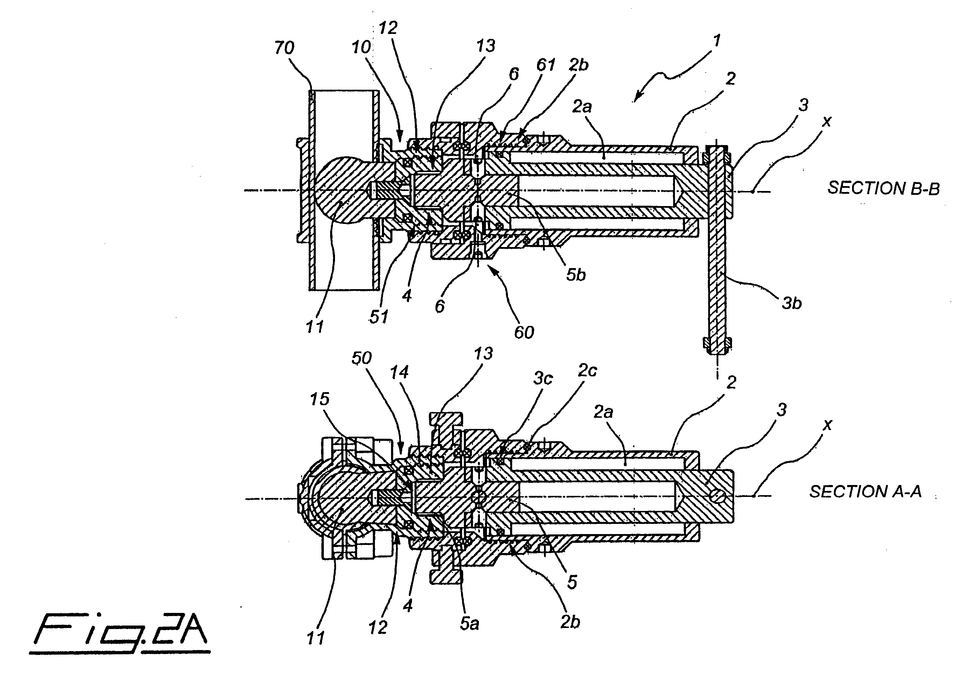

Therefore, even though in the embodiment illustrated in figures 2 and 2A a pipe fitting 50 is shown and made of two parts coupled with one another by means of threaded means such as screws or bolts, the removing tool and the plug according to the present invention should not be used exclusively with this type of pipe fitting.

The tool 1 comprises a substantially cylindrical main body 2, provided with an axial hollow 2a and an operating shaft 3 axially translatable and rotatable with respect to the main body 2 and having one end 3a provided with means 3b for its setting in rotation and/or translation.

On the surface of the main body 2 a threaded portion 2b is provided, which allows to constrain the tool 1 to a pipe fitting 50 or a valve 60. The threaded portion 2b, which allows to constrain the tool 1 to a pipe fitting 50 or a valve 60, can be arranged both on the inner and the outer surfaces of the body 2 of the tool, according to the arrangement of the threaded portion of the pipe fitting 50 or the valve 60 with which it has to cooperate to allow the tool 1 to be constrained to them.

In the embodiment shown in figures, the threaded portion 2b of the tool 1 is made on its outer surface because the threaded portion 61 of the valve 60 with which it has to cooperate, is made on the inner surface of the valve 60 itself.

In fact, the tool 1 is installed on a pipe fitting 50 constrainable to the piping or on a valve 60 allowing the installation and/or removal operations of the plug thereby preventing the fluid leakage. It should be noted that, although in the attached figures a shovel-type valve 60 formed by two swivelling portions of the type described in Patent Application MI2013A000170 in the name of the Applicant has been described, the tool 1 can be used with any other kind of valve known in the art and suitable to prevent the fluid leakage, such as a mirror or flat valve.

Advantageously, between the tool 1 and the plug 50, or valve 60, is interposed a gasket 2c, generally composed of an elastic ring arranged on the outer surface of the body 2 assuring the fluidic tightness.

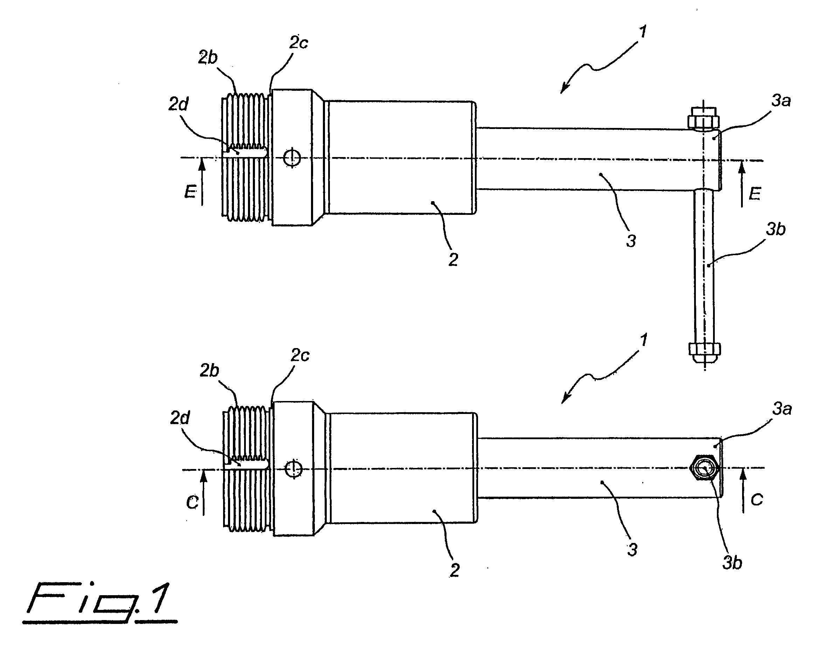

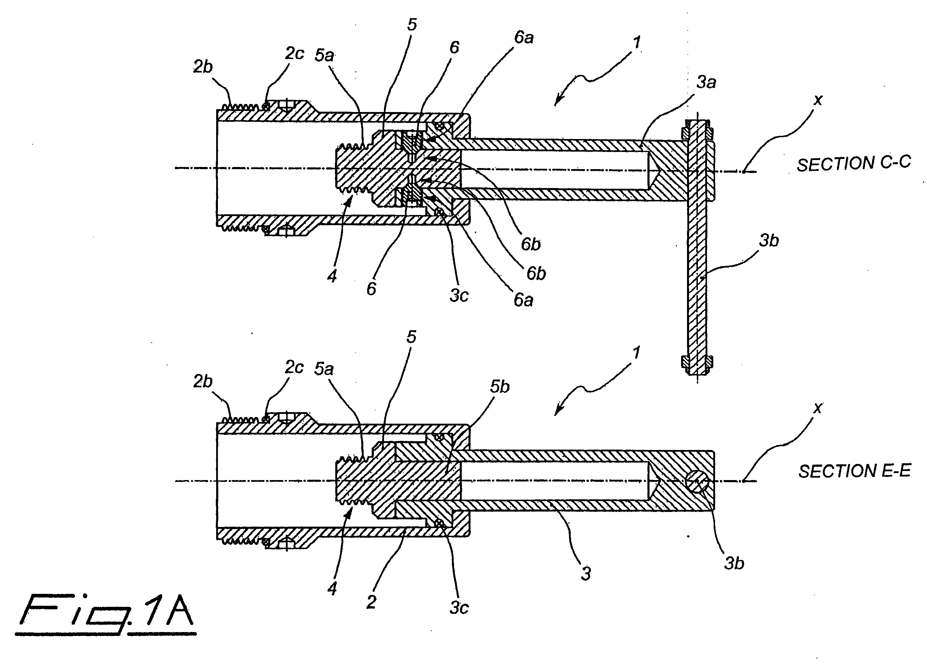

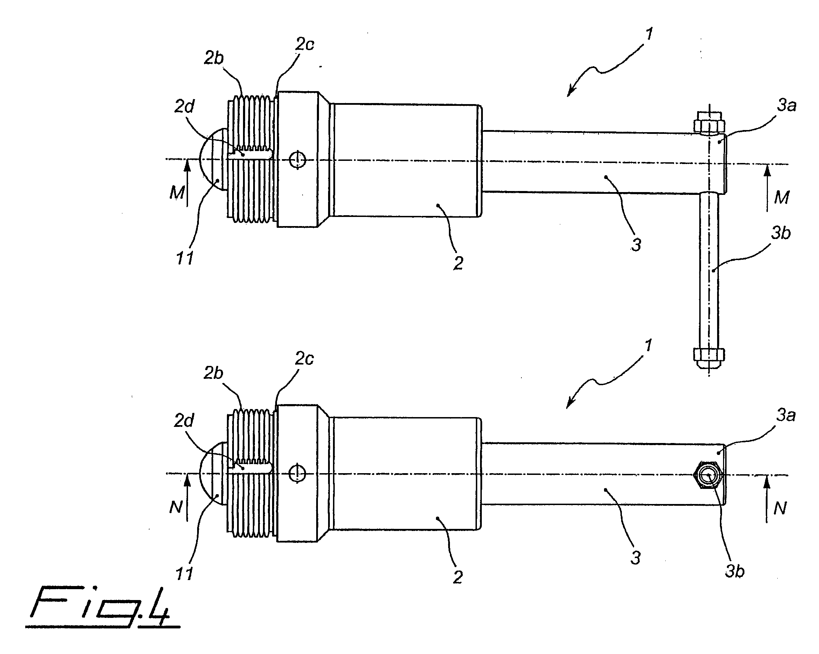

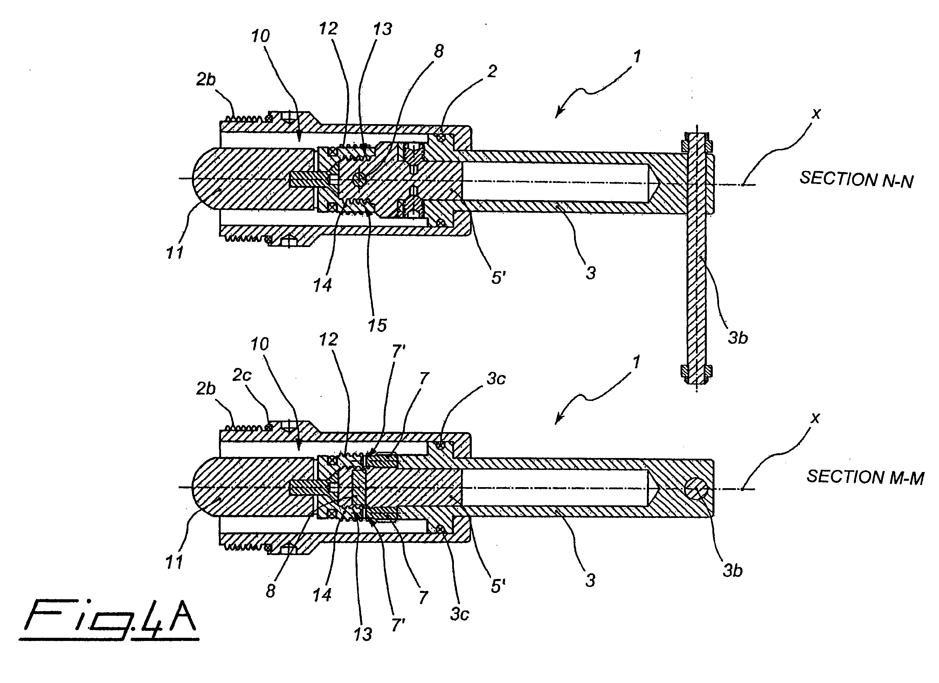

Further it should be noted that, as shown in figures 1 and 4, the threaded portion 2b can be provided with one or more vertical notches 2d advantageously allowing to eliminate residues and impurities that may accumulate in the threaded portion as a result of the constraint with the corresponding threaded portion of the pipe fitting, or the valve, installed on the piping, thus preventing it from seizing.

As better explained below while describing the operation of the tool 1, the plug 10 is removed from the pipe fitting 50 by manually operating the operating shaft 3 that has to be translated and rotated with respect to the main body 2 of the tool that is constrained to the pipe fitting 50 or the valve 60 coupled with the piping.

As mentioned, in order to cause the roto-translatory motion of the operating shaft 3, the end 3a of the latter is provided with operating means 3b. Such means comprise for example a handle 3b constrained to the operating shaft 3.

Because it's important to prevent any fluid leakage when installing and/or removing the plug 10, the tool 1 illustrated herein comprises fluidic tightness means 3c as well, interposed between the operating shaft 3 and the main body 2 of the tool 1.

In more detail, in the embodiment shown in figures, the tool 1 is preferably provided with a sealing O-ring 3c, preferably made of an elastically deformable plastic material, arranged between the operating shaft 3 and the main body 2. The ring 3c allows to prevent the fluid passage between the operating shaft 3 and the body 2 of the tool during the roto-translatory motion between these two elements.

The tool 1 is intended to cooperate with a plug 10 in order to cause the plug itself 10 to be at least removed from the pipe fitting 50 in which it is installed. In more detail the tool 1, and in particular its operating shaft 3, also comprises a threaded portion 4 intended to cooperate with a second threaded portion 13 of the plug 10 to constrain the plug 10 to the tool 1 such as to allow to effectively and safely remove it.

The plug 10 comprises at least one deformable body 11 and at least one respective supporting body 14 provided with a first threaded portion 12 intended to cooperate with a threaded portion 51 of the pipe fitting 50 in order to allow to install it on the latter, in particular by screwing.

In fact, installing the plug 10 inside the pipe fitting 50 by screwing, causes the axial displacement of the deformable body 11 of the plug 10 inside the piping 70 causing its deformation within the piping 70 itself until plugging it.

In fact, the deformation of the plug body 11 is caused by the contact with at least part of the inner surface of the piping 70 or the collar 50 and by the compressing force applied on the plug 10 as a consequence of its screwing inside the pipe fitting by the threaded portions 12 and 51 made on the plug 10 and the pipe fitting 50, respectively, cooperating with one another.

It should be noted that, in the embodiment shown in figures, the threaded portion 12 is made on the outer surface of the supporting body 14 of the plug 10 and the threaded portion 51 is made on the inner surface of the pipe fitting 50.

It is further to be noted that, preferably, such threaded portions 12 and 51 have a right-handed screwing direction such that the plug 10 can be screwed in the pipe fitting 50 as a result of the rotation motion of the plug 10 itself. As a result, preferably the plug 10 will be unscrewed by a counter-clockwise rotation.

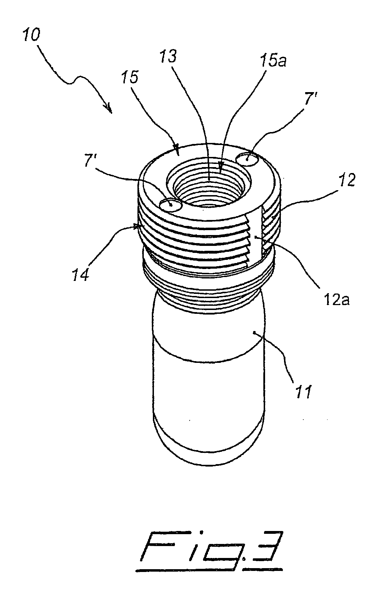

Further, it should be noted that, as shown in the perspective view of figure 3, the threaded portion 12 of the plug 10 can be provided with one or more vertical notches 12a advantageously allowing to eliminate residues and impurities that may accumulate in the threaded portion as a result of the constraint with the corresponding threaded portion 51 of the pipe fitting, thus preventing it from seizing.

According to a preferred embodiment shown in the attached figures, the plug 10, as mentioned, comprises a substantially cylindrical supporting body 14 to which the deformable body 11 is constrained to be at least translatably integral with it. The supporting body 14 and the deformable body 11 can be constrained to each other through means suitable to this purpose, such as a screw or similar threaded means.

The first thread 12, suitable to be constrained with the pipe fitting 50, is made on the outer surface of the supporting body 14.

The supporting body 14 can be made of a material, for example metal material, different from that used for the deformable body 11, which is generally made of a deformable material, such as rubber.

As mentioned, the deformable body 11 can be fixedly constrained to the supporting element 14 even though, according to further possible embodiments, between the supporting body 14 and the deformable body 11 a rotatable constraint can be provided. In other words, a rotational constraint can be arranged between the deformable body 11 and the plug supporting body 14 such as to prevent the deformable body 11 from rotating during the screwing/unscrewing of the supporting body 14 within the pipe fitting 50.

According to a particular aspect of the present invention, the supporting body 14 and the deformable body 11 of the plug 10 can be kinematically coupled by interposing spacing means (antifriction), such as one or more Teflon pads, or the like, allowing to prevent the rotation imparted to the supporting body 14 for its screwing from being transmitted to the deformable body 11.

Further, as shown in figure 3, the plug 10 and particularly its supporting body 14, is provided with at least one seat 7' suitable to cooperate with the means 7 for transmitting the rotation motion which are needed to install the plug 10 on the pipe fitting 50.

As will be better seen below, the means 7 for transmitting the rotation can be arranged on the tool 1, both integral to the operating shaft 3 and on a head 5' constrainable to the operating shaft 3 (see figures 4 and 4A). Generally, the means for transmitting the rotation to the plug 10 comprise one or more protruding elements 7 suitable to cooperate with one or more corresponding seats 7' provided on the plug 10.

As mentioned, the plug 10 further comprises at least one second threaded portion 13 having its screwing direction opposite to the screwing direction of the first threaded portion 12 of the plug 10.

This second threaded portion 13, also made on the supporting body 14 of the plug 10, is intended to cooperate with the corresponding threaded portion 4 of the tool 1 in order to allow to effectively remove the plug 10 from the pipe fitting 50, preventing the two elements from separating during the removing operations and, in particular, during the axial displacement (in the X direction) toward the outside of the pipe fitting 50. According to an aspect of the present invention, the screwing direction of the second threaded portion 13 of the plug is equal to the screwing direction of the threaded portion 4 of the removing tool of the plug, such that they can cooperate.

Advantageously, while removing the plug from the pipe fitting having the screwing direction of the second threaded portion 13 of the plug 10 equal to the screwing direction of the threaded portion 4 of the removing tool 1, but opposite to the screwing direction of the first threaded portion 12 of the plug 10, allows to firmly constrain the plug 10 to the tool 1, allowing at the same time to unscrew the plug 10 from the pipe fitting 50.

As mentioned, in the embodiment shown in figures, the first threaded portion 12 of the plug 10 that allows the constraint to the pipe fitting 50 is preferably right-handed, resulting in a left-handed screwing direction of the second threaded portion 13 of the plug, equal to the screwing direction of the threaded portion 4 of the tool 1.

Obviously, the directions of the threaded portions can be inverted, provided that the direction of the second threaded portion 13 of the plug 10 is equal to the screwing direction of the threaded portion 4 of the removing tool 1, but opposite with respect to the screwing direction of the first threaded portion 12 of the plug 10 which allows to constrain the latter to the pipe fitting 50.

In the embodiment shown in figures, the second threaded portion 13 of the plug 10 is a nut thread made on the inner surface 15a of at least one hollow 15 of the plug 10. In particular, the second threaded portion 13 is made on the inner surface 15a of a hollow 15 made on the supporting body 14 of the plug 10 (see figure 3).

Referring now to the removing tool 1, as already mentioned, it comprises at least one threaded portion 4 suitable to cooperate with the second threaded portion 13 of the plug 10; and the screwing directions of the threaded portion 4 and the second threaded portion 13 of the plug 10 are equal to each other, but opposite with respect to the direction of the first threaded portion 12 of the plug 10, which allows it to be installed on the pipe fitting 50.

As a result, when the operating shaft 3 is rotated in the direction needed to unscrew the plug 10 from the pipe fitting 50, this rotation causes the screwing of the tool 1 to the plug 10 thereby stably constraining them together by the threaded portions 13 and 4 cooperating with one another so as to prevent these two elements from separating from one another and allow to effectively remove the plug 10 from the pipe fitting 50.

The threaded portion 4, having its screwing direction opposite to the direction of the first threaded portion 12 of the plug 10 and equal to the screwing direction of the second threaded portion 13 of the plug, is rotationally integral with the operating shaft 3 of the tool 1, and can be made directly on the outer surface 3a of the operating shaft. Further, according to a possible embodiment of the present invention shown in the attached figures, the tool 1 comprises a removable head 5 constrainable to the operating shaft 3 such as to be rotationally and translatably integral with it. According to this embodiment, the threaded portion 4 having its screwing direction opposite with respect to the direction of the first threaded portion 12 of the plug 10, is made on the removable head 5. In particular, the threaded portion 4 is made on the outer surface 5a of the removable head 5 constrained to the operating shaft 3.

The tool 1 further comprises constraining means 6 for constraining the removable head 5 to the operating shaft 3. Such constraining means 6 may comprise one or more threaded elements suitable to cooperate with at least one through hole 6a of the operating shaft 3 and at least one corresponding seat 6b of the head 5. In the embodiment shown in figures 1A and 2A there are two grub screws 6 suitable to be inserted in specific holes 6a of the operating shaft and respective specific seats 6b made in the head 5 (see the sectional views of figures 1A and 2A).

Obviously other means can be used, which allow to removably constrain the head 5 to the operating shaft 3, while allowing them to be integrally constrained while rotating and translating, such that the rotation and/or translation motion manually imparted to the operating shaft 3 can be transmitted to the head 5.

It is further to be noted that in the embodiment shown in figures, the head 5 is provided with at least one protruding portion 5b suitable to be installed inside a hollow of the operating shaft 3 in order to make more resistant and stable the coupling between the head 5 itself and the operating shaft 3.

Preferably, as mentioned, the threaded portion 4 is a left-handed screw cooperating with the threaded portion 13 (nut thread) made in the hollow 15 of the plug 10.

Being the screw directions of the threaded portion 4 and 13 respectively of the removing tool 1 and the plug 10 equal to each other, but opposite with respect to the direction of the threaded portion 12 of the plug 10, if the operating shaft is set in rotation to unscrew (remove) the plug from the pipe fitting 50, the threaded portion 4 will screw in the threaded portion 13 stably constraining the removing tool, and particularly its operating shaft 3, to the plug 10. Keeping to set in rotation the operating shaft, the first threaded portion 12 will be unscrewed from the threaded portion 51 of the plug causing the unscrewing of the plug 10 from the pipe fitting 50.

Generally, the operation of installing the plug on the pipe fitting is carried out by devices provided with means 7 for transmitting to the plug the rotation motion needed to screw it at the pipe fitting 50 through corresponding threaded portions 12 and 51 cooperating with each other, respectively made on the plug 10 and the pipe fitting 50. Also the tool 1, according to the present invention, may comprise means 7 for transmitting the rotation motion from the operating shaft 3 to the plug 10.

Such means may comprise, for example, one or more protruding elements 7, constrainable to or integral with the operating shaft 3, and suitable to engage one or more corresponding seats 7' provided on the plug 10, which allows to transmit the rotation to the latter by manually setting in rotation the operating shaft 3 from outside. In the embodiment shown in figures 4 and 4A, in a direction parallel with the direction (X) of axial displacement of the plug 10 during the installation and/or removal on/from the pipe fitting 50, there are two protruding elements 7 which are suitable to engage two corresponding seats 7' made on the plug 10, see figure 4A.

Said means 7 for transmitting the rotation motion from the operating shaft 3 to the plug 10 can be arranged directly on the operating shaft 3 or else on a head 5' constrainable to the operating shaft, as it has been previously described referring to the head 5 provided with the threaded portion 4.

In case, according to a possible embodiment of the present invention, the means 7 for transmitting the rotation motion from the operating shaft to the plug, can be arranged on the same head 5 provided with the threaded portion 4 that causes the plug 10 to be removed from the pipe fitting 50. Otherwise, the means 7 and the threaded portion 4 can be contemporaneously arranged directly on the operating shaft 3.

In the embodiment shown in figures 4 and 4A, a head 5' other than the one used to remove the plug from the pipe fitting, is constrained to the operating shaft 3 to install the plug 10 in the pipe fitting 50. In details, the head 5' comprises protruding elements 7 suitable to engage the corresponding seats 7' provided on the plug 10 which allow to transmit the rotation to the plug 10 by manually setting in rotation the operating shaft 3 from outside.

It should also be noted that the tool 1 can be provided, in conjunction with the means 7 for transmitting the rotation motion of the operating shaft to the plug, with one or more restraining elements 8 to temporary restrain the plug 10 to the operating shaft 3 or the head 5', if it is present.

Said one or more restraining means 8 counter the relative axial movement of the plug 10 with respect to the operating shaft 3 (or the head 5'), such as to hold the means 7 for transmitting the rotation in the engaging position with respect to the corresponding seats 7' made in the plug 10.

In the embodiment shown in figure 4A there is a restraining element comprising a mobile grub screw 8 arranged perpendicularly with respect to the axial displacement direction (X) of the plug and therefore perpendicularly with respect to the extending direction of the means 7 for transmitting the rotation motion to the plug. An elastic element controls the movement of the mobile grub screw 8 and holds at least part of the grub screw 8 in such a position to protrude outside of the side surface of the head 5'. In this way, the part of the grub screw 8 protruding from the side surface of the head 5' can contact the threaded portion 13 of the plug 10 such as to hold the latter in contact with the head 5' during the translation and rotation needed for screwing the plug in the pipe fitting 50.

The steps of the method for removing a plug 10 from a pipe fitting 50 by means of a system of the above described type, and in particular through a tool 1 and a plug 10 of the above described type, will be now briefly described.

The method comprises the step of installing the plug 10 on a pipe fitting 50 by screwing the first threaded portion 12 of the plug 10 to the threaded portion 51 of the pipe fitting 50.

It should be noted that this step can be carried out by any tool provided with at least one rotating operating shaft comprising means for transmitting the rotation to the plug. For example, a pipe drilling tool provided with a plug-holder head and means for transmitting the rotation motion to the plug can be used.

It is also to be noted that the plug 10 can be installed and consequently screwed in the pipe fitting 50 by means of the tool 1 comprising, as mentioned, means 7 for transmitting to the plug the rotation needed to screw it in the pipe fitting 50.

As mentioned, the means 7 can be arranged on the operating shaft 3 or else on a head 5' constrainable to the operating shaft 3 and, possibly, they can be arranged on the same head 5 provided with the threaded portion 4 which causes the plug 10 to be removed from the pipe fitting 50.

In the embodiment shown in figures 4 and 4A, a head 5' other than the one used to remove the plug from the pipe fitting 50, is removably constrained to the operating shaft 3 to install the plug 10 in the pipe fitting 50. In details, the head 5' comprises protruding elements 7 suitable to engage the corresponding seats 7' provided on the plug 10, which allow to transmit the rotation to the plug 10 by manually setting in rotation the operating shaft 3 from outside.

In particular, the threaded portion 12 obtained on the outer surface of the plug 10 cooperates with the inner threaded portion 51 of the pipe fitting 50 such that the plug 10 itself can be tightened inside it.

As the plug 10 is screwed inside the pipe fitting 50, it causes the axial displacement of the deformable body 11 of the plug 10 inward the pipe fitting 50, and then inside the piping 70 causing the fluid flow to be intercepted inside it.

Subsequently, when the plug 10 has to be removed from the pipe fitting 50, the body 2 of the removing tool 1 has to be directly or indirectly constrained to the pipe fitting, for example if there is a valve 60 interposed between the pipe fitting 50 and the tool 1.

The threaded portion 2b made on the surface of the body 2 of the tool is screwed on the corresponding threaded portion of the pipe fitting 50 or the valve 60 interposed in-between.

Subsequently, the operating shaft 3 is set in rotation to screw the threaded portion 4 of the tool 1 in the second threaded portion 13 of the plug 10, having the same screwing direction. In this way, the position illustrated in the sectional views of figure 2A, wherein the threaded portion 4 is completely screwed in the second threaded portion 13 of the plug 10, is reached.

From such a position, keeping to rotate the operating shaft 3 in the same rotating direction, is thereby caused the unscrewing of the first threaded portion 12 of the plug 10 from the threaded portion 51 of the pipe fitting 50, actually allowing the plug 10 to be removed from the pipe fitting 50.

As already said, both the constraint of the removing tool 1 to the plug 10 and the removal of the plug from the pipe fitting can be quickly and effectively carried out, due to the second threaded portion 13 of the plug and the threaded portion 4 of the removing tool 1 having the same screwing direction but an opposite screwing direction with respect to the direction of the threaded portion 12 of the plug that allows to constrain it to the pipe fitting 50.

By rotating the operating shaft 3 always in the same direction, the threaded portion 4 of the tool 1 is screwed in the threaded portion 13 of the plug, such that the two elements are made integral with each other. Meanwhile, the plug 10 is caused to unscrew from the pipe fitting 50, in fact, the screwing direction of the threaded portion 12 of the plug 10 is opposite with respect to the direction of the threaded portions 4 and 13, respectively of the tool 1 and the plug 10.

As mentioned, preferably, the threaded portion 12 has a right-handed screwing direction such as to cause the unscrewing of the plug from the pipe fitting by rotating counter-clockwise the operating shaft 3, while the threaded portions 4 and 13 have a left-handed direction, so that the counter-clockwise rotating movement of the operating shaft 3 allows the threaded portion 4 of the tool 1 to be screwed in the second threaded portion 13 of the plug 10 thereby making the two elements integral with each other.

In this way it is possible to safely, simply and effectively translate the plug 10 outward (along the X direction), extracting it from the pipe fitting 50 (to the right in the attached figures), without risking the separation of the tool 1, and especially its operating shaft (and possibly the head 5) from the plug 10.

It should be noted that the tool 1 can be a pipe drilling tool provided with an outer body and an operating shaft which can rotate and translate inside it, in which the head 5 provided with the threaded portion 4 replaces the cutting head used for drilling that is, for example, a hollow cutter.

## Claims

1. Plug (10) that is suitable to be installed in a pipe fitting (50) for intercepting a fluid flow in a piping, the plug (10) being provided with at least one deformable body (11) and with at least one respective supporting body (14) comprising a first threaded portion (12) that is suitable to cooperate with at least one threaded portion (51) of said pipe fitting in which it is to be installed, and **characterized by** comprising at least one second threaded portion (13) having its screwing direction opposite to the direction of said first threaded portion (12) of said plug (10).

2. Plug according to claim 1, **characterized in that** the screwing direction of said at least one second threaded portion (13) is equal to the screwing direction of at least one threaded potion (4) of a tool for removing the plug.

3. Plug according to claim 1 or 2, wherein said at least one second threaded portion (13) of said plug (10) is a nut thread made on the inner surface (15a) of at least one hollow (15) of said plug (10).

4. Plug according to any one of the claims 1 to 3, **characterized in that** said at least one second threaded portion (13) is made on said supporting body (14).

5. Plug according to any one of the claims 1 to 4, wherein said deformable body (11) is rotatably constrained to said supporting body (14).

6. System for removing a plug (10) from a pipe fitting (50), comprising:
a. a plug (10) according to any claim 1 to 5; and
b. a tool (1) provided with a main body (2) to which an operating shaft (3) is coupled, the latter being axially translatable and rotatable with respect to said main body (2), said operating shaft (3) being provided with means (3b) for its setting in translation and/or rotation, and also with at least one threaded portion (4) that has the same screwing direction of said second threaded portion (13) of the plug (10) and that is suitable to cooperate with said second threaded portion (13) of the plug (10).

7. System according to claim 6, wherein said tool is **characterized by** comprising at least one removable head (5) constrainable to said operating shaft (3), said at least one threaded portion (4) having the same screwing direction of said second threaded portion (13) of the plug (10) being arranged on said removable head (5).

8. System according to claim 7, wherein said tool is **characterized by** comprising constraining means (6) for constraining said at least one removable head (5) to said operating shaft (3).

9. System according to claim 6, wherein said tool is **characterized in that** said at least one threaded portion (4) is made on the outer surface of said operating shaft (3).

10. System according to claim 9 combined with claim 7, wherein said at least one threaded portion (4) is made on the outer surface (5a) of said at least one removable head (5).

11. System according to any one of the preceding claims 6 - 10, wherein said tool is **characterized by** comprising means (7) for transmitting the rotation motion from said operating shaft (3) to said plug (10), preferably said means (7) comprise at least one element protruding in a direction parallel with the direction (X) of axial displacement of said plug (10) during the installation and/or removal on/from said pipe fitting (50) which are suitable to engage at least one corresponding seat (7') made on said plug (10).

12. System according to claim 11, wherein said means (7) for transmitting the rotation motion from said operating shaft (3) to said plug (10) are made on said operating shaft (3) or at least on a removable head (5') which is constrainable to said at least one operating shaft (3).

13. System according to any one of the preceding claims 6 - 12, wherein said tool is **characterized in that** said at least one threaded portion (4) having the same screwing direction of said second threaded portion (13) of the plug (10) is a screw preferably having a left-handed screwing direction.

14. Method for removing a plug (10) from a pipe fitting (50) by means of a system according to claim 6, said plug (10) having been previously installed on said pipe fitting (50) by screwing said at least one first threaded portion (12) of said plug (10) with at least one threaded portion (51) of said pipe fitting (50), the removing method comprising the steps of:
• constraining the body (2) of said removing tool (1) directly or indirectly to said pipe fitting (50);
• setting in rotation said at least one operating shaft (3) in order to screw said at least one threaded portion (4) of said removing tool (1) within said at least one second threaded portion (13) of said plug (10) having the same screwing direction, the setting in rotation of said operating shaft (3) thereby causing the unscrewing of said one first threaded portion (12) of said plug (10) from said at least one threaded portion (51) of said pipe fitting (50).

## Patentansprüche

1. Verschluss (10), der zur Installation in einem Rohrfitting (50) zum Unterbrechen eines Flüssigkeitsstromes in einem Rohrnetz geeignet ist, wobei der Verschluss (10) mit mindestens einen verformbaren Körper (11) und mit mindestens einem jeweiligen Stützkörper (14) umfassend einen ersten Gewindeabschnitt (12), der geeignet ist zum Zusammenwirken mit mindestens einem Gewindeabschnitt (51) des Rohrfitting, in dem es installiert werden soll, versehen ist und **gekennzeichnet durch** das Umfassen von mindestens einem zweiten Gewindeabschnitt (13), dessen Schraubrichtung gegensätzlich zu der Richtung des ersten Gewindeabschnitts (12) des Verschlusses (10) ist.

2. Verschluss nach Anspruch 1, **dadurch gekennzeichnet, dass** die Schraubrichtung des mindestens einen zweiten Gewindeabschnitts (13) gleich ist zu der Schraubrichtung mindestens einen ersten Gewindeabschnitts (4) eines Werkzeugs zum Entfernen des Verschlusses.

3. Verschluss nach Anspruch 1 oder 2, wobei der wenigstens eine zweite Gewindeabschnitt (13) des Verschlusses (10) ein Muttergewinde ausgebildet auf der inneren Oberfläche (15a) von mindestens einer Aushöhlung (15) des Verschlusses (10) ist.

4. Verschluss nach einem der Ansprüche 1 bis 3, **dadurch gekennzeichnet, dass** der mindestens eine zweite Gewindeabschnitt (13) auf dem Stützkörper (14) ausgebildet ist.

5. Verschluss nach einem der Ansprüche 1 bis 4, wobei der verformbare Körper (11) drehbar zu dem Stützkörper (14) gehaltert ist.

6. System zum Entfernen eines Verschlusses (10) von einem Rohrfitting (50), umfassend:
a. einen Verschluss (10) nach einem der Ansprüche 1 bis 5; und
b. ein Werkzeug (1) ausgestattet mit einem Hauptkörper (2), an den eine Betätigungswelle (3) gekoppelt ist, letztere axial verschiebbar und drehbar gegenüber dem Hauptkörper (2) ist, wobei die Betätigungswelle (3) mit Mitteln (3b) zum Einstellen der Translation und/oder Rotation versehen ist, und auch mit mindestens einem Gewindeabschnitt (4), der die selbe Schraubrichtung des zweiten Gewindeabschnitts (13) des Verschlusses (10) aufweist und der zum Zusammenwirken mit dem zweiten Gewindeabschnitt (13) des Verschlusses (10) geeignet ist.

7. System nach Anspruch 6, wobei das Werkzeug **gekennzeichnet ist durch** das Umfassen von mindestens einem entfernbaren Kopf (5) halterbar auf der Betätigungswelle (3), wobei der mindestens eine Gewindeabschnitt (4) die selbe Schraubrichtung des zweiten Gewindeabschnitts (13) des Verschlusses (10) angeordnet auf dem entfernbaren Kopf (5) aufweist.

8. System nach Anspruch 7, wobei das Werkzeug **gekennzeichnet ist durch** das Umfassen von Haltemitteln (6) zum Haltern des mindestens einen entfernbaren Kopfes (5) auf der Betätigungswelle (3).

9. System nach Anspruch 6, wobei das Werkzeug **dadurch gekennzeichnet ist, dass** der mindestens eine Gewindeabschnitt (4) auf der äußeren Oberfläche der Betätigungswelle (3) ausgebildet ist.

10. System nach Anspruch 9 in Kombination mit Anspruch 7, wobei der mindestens eine Gewindeabschnitt (4) auf der äußeren Oberfläche (5a) des mindestens einen entfernbaren Kopfes (5) ausgebildet ist.

11. System nach einem der vorherigen Ansprüche 6 bis 10, wobei das Werkzeug **gekennzeichnet ist durch** das Umfassen von Mitteln (7) zum Übertragen der Rotationsbewegung von der Betätigungswelle (3) zu dem Verschluss (10), wobei vorzugsweise die Mittel (7) wenigstens ein Element vorspringend in eine Richtung parallel zu der Richtung (X) einer axialen Verschiebung des Verschlusses (10) während der Installation und/oder dem Entfernen auf/von dem Rohrfitting (50) umfassen, welche zum Eingreifen wenigstens einer korrespondieren Aufnahme (7') ausgebildet auf dem Verschluss (10) geeignet sind.

12. System nach Anspruch 11, wobei die Mittel (7) zum Übertragen der Rotationsbewegung von der Betätigungswelle (3) zu dem Verschluss (10) auf der Betätigungswelle (3) oder mindestens auf einem entfernbaren Kopf (5'), welcher auf der mindestens einen Betätigungswelle (3) halterbar ist, ausgebildet sind.

13. System nach einem der vorstehenden Ansprüche 6 bis 12, wobei das Werkzeug **dadurch gekennzeichnet ist, dass** der mindestens eine Gewindeabschnitt (4) mit derselben Schraubrichtung des zweiten Gewindeabschnitts (13) des Verschlusses (10) eine Schraube ist, die vorzugsweise eine linksgängige Schraubrichtung aufweist.

14. Verfahren zum Entfernen eines Verschlusses (10) von einem Rohrfitting (50) mittels eines Systems nach Anspruch 6, wobei der Verschluss (10) zuvor auf dem Rohrfitting (50) installiert wurde, indem der mindestens eine erste Gewindeabschnitt (12) des Verschlusses (10) mit mindestens einem Gewindeabschnitt (51) des Rohrfittings (50) verschraubt wird, wobei das Verfahren zum Entfernen die folgenden Schritte umfasst:
• Halten des Körpers (2) des Entfernungswerkzeugs (1) direkt oder indirekt an dem Rohrfitting (50);
• Einstellen der Rotation der mindestens einen Betätigungswelle (3) um den mindestens einen Gewindeabschnitt (4) des Entfernungswerkzeugs (1) in den mindestens einen zweiten Gewindeabschnitt (13) des Verschlusses (10) mit derselben Schraubrichtung einzuschrauben, wobei das Einstellen der Rotation der Betätigungswelle (3) ein Ausschrauben des ersten Gewindeabschnitts (12) des Verschlusses (10) aus dem mindestens einen Gewindeabschnitt (51) des Rohrfittings (50) bewirkt.

## Revendications

1. Obturateur (10) qui est approprié pour être installé dans un raccord de conduit (50) pour arrêter un écoulement de fluide dans un conduit, l'obturateur (10) étant pourvu d'au moins un corps déformable (11) et d'au moins un corps de support respectif (14) comprenant une première portion filetée (12) qui est appropriée pour coopérer avec au moins une portion filetée (51) dudit raccord de conduit dans lequel il doit être installé, et **caractérisé en ce qu'**il comprend au moins une deuxième portion filetée (13) ayant sa direction de vissage opposée à la direction de ladite première portion filetée (12) dudit obturateur (10).

2. Obturateur selon la revendication 1, **caractérisé en ce que** la direction de vissage de ladite au moins une deuxième portion filetée (13) est égale à la direction de vissage d'au moins une portion filetée (4) d'un outil destiné à retirer l'obturateur.

3. Obturateur selon la revendication 1 ou 2, dans lequel ladite au moins une deuxième portion filetée (13) dudit obturateur (10) est un filetage d'écrou créé sur la surface intérieure (15a) d'au moins un creux (15) dudit obturateur (10).

4. Obturateur selon l'une quelconque des revendications 1 à 3, **caractérisé en ce que** ladite au moins une deuxième portion filetée (13) est créée sur ledit corps de support (14).

5. Obturateur selon l'une quelconque des revendications 1 à 4, dans lequel ledit corps déformable (11) est contraint de manière rotative sur ledit corps de support (14).

6. Système pour retirer un obturateur (10) d'un raccord de conduit (50), comprenant :
a. un obturateur (10) selon l'une quelconque des revendications 1 à 5 ; et
b. un outil (1) pourvu d'un corps principal (2) auquel est couplé un arbre d'actionnement (3), ce dernier pouvant axialement se déplacer et tourner par rapport audit corps principal (2), ledit arbre d'actionnement (3) étant pourvu d'un moyen (3b) destiné à sa mise en déplacement et/ou en rotation, et également pourvu d'au moins une portion filetée (4) qui a la même direction de vissage de ladite deuxième portion filetée (13) de l'obturateur (10) et qui est appropriée pour coopérer avec ladite deuxième portion filetée (13) de l'obturateur (10).

7. Système selon la revendication 6, dans lequel ledit outil est **caractérisé en ce qu'**il comprend au moins une tête amovible (5) pouvant être contrainte sur ledit arbre d'actionnement (3), ladite au moins une portion filetée (4) ayant la même direction de vissage de ladite deuxième portion filetée (13) de l'obturateur (10) étant agencée sur ladite tête amovible (5).

8. Système selon la revendication 7, dans lequel ledit outil est **caractérisé en ce qu'**il comprend un moyen de contrainte (6) pour contraindre ladite au moins une tête amovible (5) sur ledit arbre d'actionnement (3).

9. Système selon la revendication 6, dans lequel ledit outil est **caractérisé en ce que** ladite au moins une portion filetée (4) est créée sur la surface extérieure dudit arbre d'actionnement (3).

10. Système selon la revendication 9 combinée avec la revendication 7, dans lequel ladite au moins une portion filetée (4) est créée sur la surface extérieure (5a) de ladite au moins une tête amovible (5).

11. Système selon l'une quelconque des revendications précédentes 6-10, dans lequel ledit outil est **caractérisé en ce qu'**il comprend un moyen (7) pour transmettre le mouvement de rotation dudit arbre d'actionnement (3) audit obturateur (10), de préférence ledit moyen (7) comprend au moins un élément faisant saillie dans une direction parallèle à la direction (X) de déplacement axial dudit obturateur (10) durant son installation sur ledit raccord de conduit (50) et/ou son retrait de ce dernier qui est approprié pour engager au moins un siège correspondant (7') créé sur ledit obturateur (10).

12. Système selon la revendication 11, dans lequel ledit moyen (7) pour transmettre le mouvement de rotation dudit arbre d'actionnement (3) audit obturateur (10) est créé sur ledit arbre d'actionnement (3) ou au moins sur une tête amovible (5') qui peut être contrainte sur ledit au moins un arbre d'actionnement (3).

13. Système selon l'une quelconque des revendications précédentes 6-12, dans lequel ledit outil est **caractérisé en ce que** ladite au moins une portion filetée (4) ayant la même direction de vissage de ladite deuxième portion filetée (13) de l'obturateur (10) est une vis ayant de préférence une direction de vissage vers la gauche.

14. Procédé pour enlever un obturateur (10) d'un raccord de conduit (50) à l'aide d'un système selon la revendication 6, ledit obturateur (10) ayant été préalablement installé sur ledit raccord de conduit (50) en vissant ladite au moins une première portion filetée (12) dudit obturateur (10) avec au moins une portion filetée (51) dudit raccord de conduit (50), ledit procédé de retrait comprenant les étapes consistant à :
- contraindre le corps (2) dudit outil de retrait (1) directement ou indirectement sur ledit raccord de conduit (50) ;
- mettre en rotation ledit au moins un arbre d'actionnement (3) afin de visser ladite au moins une portion filetée (4) dudit outil de retrait (1) dans ladite au moins une deuxième portion filetée (13) dudit obturateur (10) ayant la même direction de vissage, la mise en rotation dudit arbre d'actionnement (3) provoquant ainsi le dévissage de ladite première portion filetée (12) dudit obturateur (10) de ladite au moins une portion filetée (51) dudit raccord de conduit (50).
